(19) Europäisches Patentamt
European Patent Office
Office européen des brevets

(11) **EP 3 157 128 A1**

(12) **EUROPEAN PATENT APPLICATION**

(43) Date of publication:
**19.04.2017 Bulletin 2017/16**

(21) Application number: **16193935.0**

(22) Date of filing: **14.10.2016**

(51) Int Cl.:
*H02J 7/02* (2016.01)     *H02J 50/10* (2016.01)
*H02J 50/12* (2016.01)     *H02J 50/90* (2016.01)
*B60L 11/18* (2006.01)     *H01F 38/14* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.10.2015   KR 20150144602**

(71) Applicant: **Hyundai Motor Company**
**Seoul 06797 (KR)**

(72) Inventors:
• **SEONG, Jae Yong**
  **Anyang-si, Gyeonggi-do 14052 (KR)**
• **KIM, Do Hoon**
  **Seoul 08015 (KR)**

(74) Representative: **Viering, Jentschura & Partner mbB**
  **Patent- und Rechtsanwälte**
  **Am Brauhaus 8**
  **01099 Dresden (DE)**

(54) **METHOD AND APPARATUS FOR MAGNETIC FIELD ALIGNMENT IN WIRELESS POWER CHARGING SYSTEM FOR ELECTRIC VEHICLES USING THE SMART KEY SYSTEM**

(57)     A magnetic field alignment method for wireless charging of electric vehicle includes: transmitting a first signal through a first antenna and a second signal through a second antenna, wherein each of the first signal and the second signal includes an antenna identifier, and the first antenna and the second antenna are antennas used for a smart key (SMK) system installed in an electric vehicle (EV); receiving a response signal in response to the first signal and the second signal from a transponder in a location corresponding to a primary coil of the wireless charging system; and estimating a position of the primary coil based on a received signal strength of the first signal and a received signal strength of the second signal, which are included in the received response signal.

FIG. 2

**Description**

**BACKGROUND**

1. Technical Field

The present disclosure relates generally to magnetic field alignment of a wireless power charging system, and more particularly, to magnetic field alignment methods and apparatuses for a wireless power charging system using a low frequency antenna installed in a vehicle, and a primary pad used for the same.

2. Related Art

Generally, wireless charging technologies for electric vehicles (EV) belonging to a high-power transfer technology domain, which transfer power above a predetermined level (e.g., 2.4 kW), may be classified into either magnetic induction or magnetic resonance. These wireless power transfer technologies are being integrated with various technologies, such as wireless communications, privacy information security technologies, etc., so that reliability, stability, durability, convenience, effectiveness, and functionality (e.g., charging/payment) of a wireless charging system can be enhanced. Also, almost all domains such as various hardware structures of an in-vehicle assembly, vehicle-to-vehicle communications, vehicle-to-infrastructure communications, and vehicle-to-person (or user terminal) communications have been integrated into the wireless charging system.

Meanwhile, when wirelessly charging a high-voltage battery of an EV, it is necessary for higher charging efficiency to align a ground assembly (GA) coil (i.e., primary coil) of a charging station with a vehicle assemble (VA) coil (i.e., secondary coil) of the EV. Although various studies for coil alignment have been conducted, effectively aligning one of a plurality of primary coils located in a plurality of parking bays with a secondary coil of the EV remains a challenge.

For example, in a case that an EV enters a wireless network area, such as global positioning system (GPS), 3G, long-term evolution (LTE), WiFi, etc., of a charging station, it becomes necessary to precisely calculate the distance between a secondary pad of the vehicle and a plurality of primary pads for wireless power transfer in at least one GA. However, problems occur in the distance calculation.

For instance, when GPS is used for calculating the distance, it has an error range of about 5 meters for outdoor parking area. That is, when each parking bay has a primary pad, and distances between respective parking bays are about 3 meters, it is practically impossible for an EV to align its secondary pad with a primary pad of a specific parking bay using satellite signals. Further, effects of severe interferences in the outdoor parking area may further complicate the position estimation.

Meanwhile, when positioning techniques based on cellular mobile communication networks such as LTE or 3G are used, a wireless communication device equipped in a vehicle may be employed. However, reliability and stability of position estimation may vary largely according to types of base station, or communication manner of each network.

Also, when positioning techniques based on ubiquitous technologies such as WiFi or radio frequency identification (RFID) are used, they can be used for indoor and outdoor cases both. However, their signal ranges are exceedingly small, and undesired effects caused by interferences between adjacent access points may make it difficult to correctly estimate positions of the pads.

For these reasons, it is possible only to roughly estimate positions of respective parking bays located in a charging area of a wireless power charging system when using wireless networks. Alignment methods and apparatuses are needed to effectively align a VA coil of an EV with a GA coil of a specific parking bay.

**SUMMARY**

Accordingly, embodiments of the present disclosure are provided hereinbelow to substantially obviate one or more problems due to limitations and disadvantages of the related art. Example embodiments of the present disclosure provide a primary pad used for effective magnetic field alignment between a charging infrastructure of an EV wireless power charging system and an EV. Example embodiments of the present disclosure also provide magnetic field alignment methods for a wireless power charging system using signals of low frequency (LF) antennas in an EV. Example embodiments of the present disclosure also provide magnetic field alignment apparatuses using a smart key system.

According to embodiments of the present disclosure, a magnetic field alignment method for a wireless charging system, performed by a magnetic field alignment apparatus including a vehicle assembly (VA) controller, includes: transmitting a first signal through a first antenna and a second signal through a second antenna, wherein each of the first signal and the second signal includes an antenna identifier, and the first antenna and the second antenna are antennas used for a smart key (SMK) system installed in an electric vehicle (EV); receiving a response signal in response to the first signal and the second signal from a transponder in a location corresponding to a primary coil of the wireless charging system; and estimating a position of the primary coil based on a received signal strength of the first signal and a received signal strength of the second signal, which are included in the received response signal.

In the receiving of the response signal, a plurality of frames constituting the response signal may be transmitted by the transponder, and the first signal and the second signal may be retransmitted when a predetermined number of frames constituting the response signal are not received during a predetermined period.

The response signal may include first response information including an identifier of the first antenna, received signal strength of the first signal, and transmission signal strength of the transponder, and may further include second response information including an identifier of the second antenna, received signal strength of the second signal, and transmission signal strength of the transponder.

The method may further include, after the receiving of the response signal, comparing the transmission signal strength of the transponder with a received signal strength of the response signal transmitted by the transponder, and determining that the transponder and the magnetic field alignment apparatus are mismatched when a result of the comparison is less than a predetermined threshold.

The first antenna and the second antenna may be connected to the VA controller via the SMK system, and be installed in external door handles of a driver's seat and a passenger's seat of the EV.

The method may further include, after the estimating of the position of the primary pad, aligning the primary coil with a secondary coil of the EV, wherein the secondary pad is moved to a position where a received signal strength between the first antenna and the transponder is maximized, and a received signal strength between the second antenna and the transponder is maximized.

The response signal may be received at a frequency different from respective frequencies of the first signal and the second signal, and the frequency includes an ultra-high frequency (UHF).

Furthermore, according to embodiments of the present disclosure, a magnetic field alignment apparatus for a wireless power charging system, which is installed in an electric vehicle (EV),includes: a memory storing program instructions for performing a magnetic field alignment method; and a processor executing the stored program instructions, which when executed cause the magnetic field alignment apparatus to operate as: a transmission part transmitting a first signal through a first antenna and a second signal through a second antenna, wherein each of the first signal and the second signal includes an antenna identifier, and the first antenna and the second antenna are antennas used for a smart key (SMK) system installed in an electric vehicle (EV); a reception part receiving a response signal in response to the first signal and the second signal from a transponder in a location corresponding to a primary coil of the wireless power charging system; and an estimation part configured to estimate a position of the primary coil based on a received signal strength of the first signal and a received signal strength of the second signal, which are included in the received response signal.

The first signal and the second signal may be retransmitted by the transmission part when a predetermined number of frames constituting the response signal are not received by the reception part during a predetermined period.

The response signal may include first response information including an identifier of the first antenna, received signal strength of the first signal, and transmission signal strength of the transponder, and may further include second response information including an identifier of the second antenna, received signal strength of the second signal, and transmission signal strength of the transponder.

The magnetic field alignment apparatus may further operate as a mismatch determination part comparing the transmission signal strength of the transponder with a received signal strength of the response signal transmitted by the transponder, and determining that the transponder and the magnetic field alignment apparatus are mismatched when a result of the comparison is less than a predetermined threshold.

The apparatus may further include at least one interface for transmitting signals to and receiving signals from a control part of the SMK system.

The magnetic field alignment apparatus may further operate as an alignment part aligning the primary coil with a secondary coil of the EV according to an estimation result of the estimation part, wherein the alignment part moves the secondary pad to a position where a received signal strength between the first antenna and the transponder is maximized, and a received signal strength between the second antenna and the transponder is maximized.

The reception part may receive the response signal at a frequency different from respective frequencies of the first signal and the second signal.

Furthermore, according to embodiments of the present disclosure, a primary pad for a wireless power charging system includes: a primary coil which is connected to an electric vehicle (EV) power supply apparatus of a charging station and transfers power to a secondary coil of an EV via magnetic induction coupling or magnetic resonance coupling; and a transponder which is embedded in a housing supporting the primary pad or combined with the housing. The transponder receives a first signal and a second signal from the EV and, in response, transmits a response signal including information which is determined based on antenna identifiers included in the first signal and the second signal.

The transponder may transmit a plurality of frames constituting the response signal, and a control part of a smart key (SMK) system of the EV which receives the response signal may determine a reception failure when a predetermined number of frames constituting the response signal are not received during a predetermined period.

The response signal may include first response information including an identifier of the first antenna, received signal strength of the first signal, and transmission signal strength of the transponder, and may further include second response information including an identifier of the second antenna, received signal strength of the second signal, and transmission signal strength of the transponder.

The transponder may receive the first signal and the second signal at a low frequency (LF) frequency, and transmit the response signal at a radio frequency or an ultra-high frequency (UHF) higher than the LF.

The primary coil may be located in a position corresponding to a primary coil of the charging station, or located in a position having a predetermined distance from at least one other primary coil of the charging station.

The transponder may further include a power supply part which is charged when the first signal or the second signal is received.

Using the above-described magnetic field alignment method and apparatus for a wireless charging system according to embodiments of the present disclosure, alignment between a charging infrastructure and a vehicle, in an EV wireless charging system, can be effectively performed. In addition, an improved method of magnetic field alignment using an auxiliary coil of a vehicle and a primary pad used for the same is provided. In addition, by minimizing use of new sensors and antennas, magnetic field alignment for the wireless charging system can be effectively performed by utilizing a low frequency (LF) system which is already installed in the vehicle.

## BRIEF DESCRIPTION OF DRAWINGS

Example embodiments of the present disclosure will become more apparent by describing in detail example embodiments of the present disclosure with reference to the accompanying drawings, in which:

FIG. 1 is an exemplary view to explain a case in which a vehicle, having a magnetic field alignment apparatus for a wireless power charging system according to embodiments of the present disclosure, enters a wireless network of a charging area where GAs are arranged;
FIG. 2 is an exemplary view to explain communications between a magnetic field alignment apparatus and a transponder corresponding to a primary pad;
FIG. 3 is a block diagram of a smart key system of a vehicle, which connects a magnetic field alignment apparatus to a transponder;
FIG. 4 is a sequence chart illustrating a magnetic field alignment method of a wireless power charging system according to embodiments of the present disclosure;
FIG. 5 is an exemplary view of a format of a response signal received from a transponder;
FIG. 6 is a block diagram of a magnetic field alignment apparatus of a wireless power charging system according to embodiments of the present disclosure;
FIG. 7 is a sequence chart illustrating an additional magnetic field alignment method of a wireless power charging system according to embodiments of the present disclosure;
FIG. 8 is a view to explain a triangulation technique used for a magnetic field alignment method according to embodiments of the present disclosure;
FIG. 9 is a view to explain a RSSI based position estimation method used for a magnetic field alignment method according to embodiments of the present disclosure;
FIG. 10 is a cross-sectional diagram of a primary pad according to embodiments of the present disclosure;
FIG. 11 is a cross-sectional diagram of a variation of a primary pad;
FIG. 12 is a block diagram of a transponder of a primary pad;
FIG. 13 is a view of an antenna used for a magnetic field alignment apparatus of a wireless power charging system according to embodiments of the present disclosure; and
FIG. 14 is a block diagram to explain a flow of wireless power transfer of a wireless charging system according to embodiments of the present disclosure.

## DETAILED DESCRIPTION OF EMBODIMENTS

Embodiments of the present disclosure are disclosed herein. However, specific structural and functional details disclosed herein are merely representative for purposes of describing example embodiments of the present disclosure. However, embodiments of the present disclosure may be embodied in many alternate forms and should not be construed as limited to example embodiments of the present disclosure set forth herein. While describing the respective drawings, like reference numerals designate like elements.

It will be understood that although the terms "first", "second", etc. may be used herein to describe various components, these components should not be limited by these terms. These terms are used merely to distinguish one element from another. For example, without departing from the scope of the present disclosure, a first component may be designated as a second component, and similarly, the second component may be designated as the first component. The term "and/or" include any and all combinations of one of the associated listed items.

It will be understood that when a component is referred to as being "connected to" another component, it can be directly or indirectly connected to the other component. That is, for example, intervening components may be present. On the contrary, when a component is referred to as being "directly connected to" another component, it will be understood that there is no intervening components.

Terms are used herein only to describe the exemplary embodiments but not to limit the present disclosure. Singular expressions, unless defined otherwise in contexts, include plural expressions. In the present specification, terms of "comprise" or "have" are used to designate features, numbers, steps, operations, elements, components or combinations thereof disclosed in the specification as being present but not to exclude possibility of the existence or the addition of one or more other features, numbers, steps, operations, elements, components, or combinations thereof.

All terms including technical or scientific terms, unless being defined otherwise, have the same meaning generally understood by a person of ordinary skill in the art. It will be understood that terms defined in dictionaries generally used are interpreted as including meanings identical to contextual meanings of the related art, unless definitely defined otherwise in the present specification, are not interpreted as being ideal or excessively formal meanings.

Terms used in the present disclosure are defined as follows.

'Electric Vehicle, EV' : An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator. The EV may be four or more wheeled vehicle manufactured for use primarily on public streets, roads.

The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

'Plug-in Electric Vehicle, PEV' : An Electric Vehicle that recharges the on-vehicle primary battery by connecting to the power grid.

'Plug-in vehicle, PV': An electric vehicle rechargeable through wireless charging from an electric vehicle supply equipment (EVSE) without using a physical plug or a physical socket

'Heavy duty vehicle; H.D. Vehicle': Any four-or more wheeled vehicle as defined in 49 CFR 523.6 or 49 CFR 37.3 (bus).

'Light duty plug-in electric vehicle': A three or four-wheeled vehicle propelled by an electric motor drawing current from a rechargeable storage battery or other energy devices for use primarily on public streets, roads and highways and rated at less than 4,545 kg gross vehicle weight.

'Wireless power charging system, WCS': The system for wireless power transfer and control between the GA and VA including alignment and communications. This system in the forward direction, transfers energy from the electric supply network to the electric vehicle electromagnetically through a two-part loosely coupled transformer.

'Wireless power transfer, WPT': The transfer of electrical power from the AC supply network to the electric vehicle by contactless means.

'Utility': A set of systems which supply electrical energy and include a customer information system (CIS), an advanced metering infrastructure (AMI), rates and revenue system, etc. The utility may provide the EV with energy through rates table and discrete events. Also, the utility may provide information about certification on EVs, interval of power consumption measurements, and tariff.

'Smart charging': A system in which EVSE and/or PEV communicate with power grid in order to optimize charging ratio or discharging ratio of EV by reflecting capacity of the power grid or expense of use.

'Automatic charging': A procedure in which inductive charging is automatically performed after a vehicle is located in a proper position corresponding to a primary charger assembly that can transfer power. The automatic charging may be performed after obtaining necessary authentication and right.

'Interoperability': A state in which component of a system interwork with corresponding components of the system in order to perform operations aimed by the system. Also, information interoperability may mean capability that two or more networks, systems, devices, applications, or components can efficiently share and easily use information without giving inconvenience to users.

'Inductive charging system': A system transferring energy from a power source to an EV through a two-part gapped core transformer in which the two halves of the transformer, primary and secondary coils are physically separated from one another. In the present disclosure, the inductive charging system may correspond to an EV power transfer system.

'Inductive coupler' : The transformer formed by the coil in the GA Coil and the coil in the VA Coil that allows power to be transferred with galvanic isolation.

'Inductive coupling': Magnetic coupling between two coils. In the present disclosure, coupling between the GA Coil and the VA Coil.

'Ground assembly, GA' : An assembly on the infrastructure side consisting of the GA Coil, a power/frequency conversion unit and GA controller as well as the wiring from the grid and between each unit, filtering circuits, housing(s) etc., necessary to function as the power source of wireless power charging system. The GA may include the communication elements necessary for communication between the GA and the VA.

'Vehicle assembly, VA' : An assembly on the vehicle consisting of the VA Coil, rectifier/power conversion unit and VA controller as well as the wiring to the vehicle batteries and between each unit, filtering circuits, housing(s), etc., necessary to function as the vehicle part of a wireless power charging system. The VA may include the communication elements necessary for communication between the VA and the GA.

The GA may be referred to as a primary device (PD), and the VA may be referred to as a secondary device (SD).

'Primary device': An apparatus which provides the contactless coupling to the secondary device. That is, the primary device may be an apparatus external to an EV. When the EV is receiving power, the primary device may act as the source of the power to be transferred. The primary device may include the housing and all covers.

'Secondary device': An apparatus mounted on the EV which provides the contactless coupling to the primary device. That is, the secondary device may be installed in the EV. When the EV is receiving power, the secondary device may transfer the power from the primary to the EV. The secondary device may include the housing and all covers.

'GA controller': The portion of the GA which regulates the output power level to the GA Coil based on information from the vehicle.

'VA controller': The portion of the VA that monitors specific on-vehicle parameters during charging and initiates communication with the GA to control output power level.

The GA controller may be referred to as a primary device communication controller (PDCC), and the VA controller may be referred to as an electric vehicle communication controller (EVCC).

'Magnetic gap': The vertical distance between the plane of the higher of the top of the litz wire or the top of the magnetic material in the GA Coil to the plane of the lower of the bottom of the litz wire or the magnetic material in the VA Coil when aligned.

'Ambient temperature': The ground-level temperature of the air measured at the subsystem under consideration and not in direct sun light.

'Vehicle ground clearance': The vertical distance between the ground surface and the lowest part of the vehicle floor pan.

'Vehicle magnetic ground clearance': The vertical distance between the plane of the lower of the bottom of the litz wire or the magnetic material in the VA Coil mounted on a vehicle to the ground surface.

'VA Coil magnetic surface distance': the distance between the plane of the nearest magnetic or conducting component surface to the lower exterior surface of the VA coil when mounted. This distance includes any protective coverings and additional items that may be packaged in the VA Coil enclosure.

The VA coil may be referred to as a secondary coil, a vehicle coil, or a receive coil. Similarly, the GA coil may be referred to as a primary coil, or a transmit coil.

'Exposed conductive component': A conductive component of electrical equipment (e.g. an electric vehicle) that may be touched and which is not normally energized but which may become energized in case of a fault.

'Hazardous live component': A live component, which under certain conditions can give a harmful electric shock.

'Live component': Any conductor or conductive component intended to be electrically energized in normal use.

'Direct contact': Contact of persons with live components. (See IEC 61440)

'Indirect contact': Contact of persons with exposed, conductive, and energized components made live by an insulation failure. (See IEC 61140)

'Alignment': A process of finding the relative position of primary device to secondary device and/or finding the relative position of secondary device to primary device for the efficient power transfer that is specified. In the present disclosure, the alignment may direct to a fine positioning of the wireless power transfer system.

'Pairing': A process by which a vehicle is correlated with the unique dedicated primary device, at which it is located and from which the power will be transferred. The pairing may include the process by which a VA controller and a GA controller of a charging spot are correlated. The correlation/association process may include the process of the establishment of a relationship between two peer communication entities.

'Command and control communication': The communication between the EV supply equipment and the EV exchanges information necessary to start, control and terminate the process of WPT.

'High level communication (HLC)': HLC is a special kind of digital communication. HLC is necessary for additional services which are not covered by command & control communication. The data link of the HLC may use a power line communication (PLC), but it is not limited.

'Low power excitation (LPE)': LPE means a technique of activating the primary device for the fine positioning ad pairing so that the EV can detect the primary device, and vice versa.

The charging station may comprise at least one GA and at least one GA controller managing the at least one GA. The GA may comprise at least one wireless communication device. The charging station may mean a place having at least one GA, which is installed in home, office, public place, road, parking area, etc.

Hereinafter, example embodiments according to the present disclosure will be explained in detail by referring to accompanying figures.

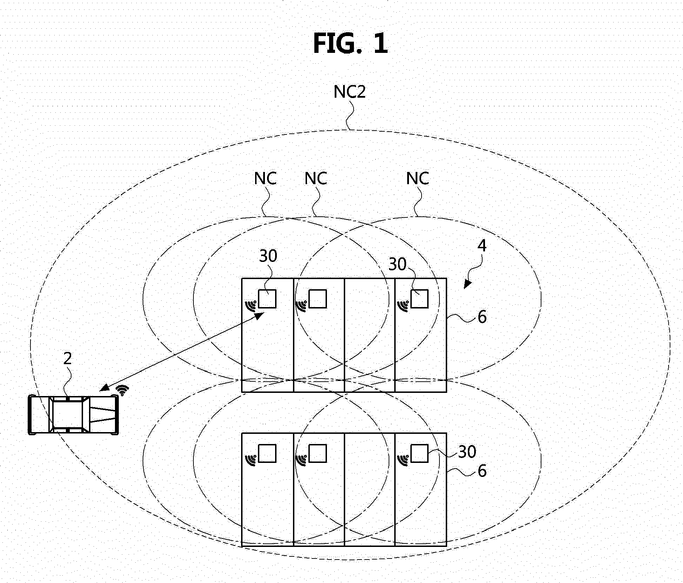

FIG. 1 is an exemplary view to explain a case in which a vehicle, having a magnetic field alignment apparatus for a wireless power charging system according to embodiments of the present disclosure, enters a wireless network of a charging area where GAs are arranged.

As shown in FIG. 1, in a case that a vehicle 2 according to embodiments of the present disclosure enters a charging area 4, a VA controller may attempt to connect with a GA controller via a wireless network such as a mobile communication network or WiFi and a global positioning system (GPS). Here, a plurality of parking bays 6 may exist in the charging area 4, and at least some of the parking bays 6 may respectively have a charging spot or a GA. The GA may include a primary pad 30, each of which may have a GA coil (hereinafter, referred to as a 'primary coil') and a corresponding transponder.

Communication elements of the GA may form WiFi coverage NCs or GPS coverage NC2. Thus, the vehicle 2 may use the wireless network provided by the GA to access a specific primary pad among the plurality of primary pads 30. However, as described in the related art, since the conventional wireless network has low reliability, it may not give a good result to apply the conventional wireless network to magnetic field alignment for a wireless power charging system. Thus, in embodiments according to the present disclosure, transponders may be located in respective primary pads 30, and a pair of in-vehicle antennas may interoperate with the transponders so that the specific primary pad or the charging spot can be effectively aligned with a secondary pad of the vehicle 2.

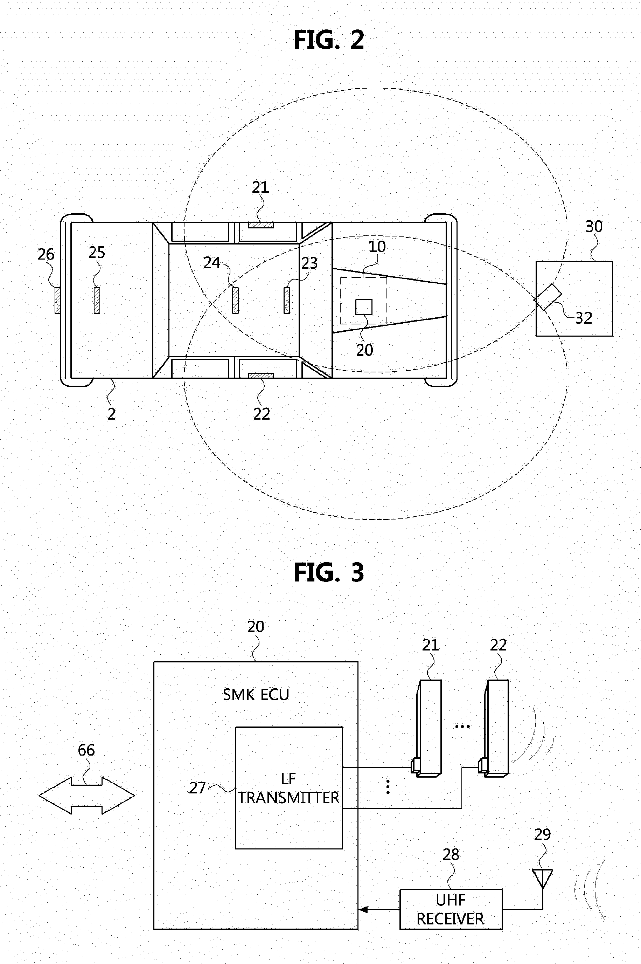

FIG. 2 is an exemplary view to explain communications between a magnetic field alignment apparatus and a transponder corresponding to a primary pad.

As shown in FIG. 2, a vehicle having a magnetic field alignment apparatus 10 according to embodiments of the present disclosure may communicate with a transponder 32 corresponding to a primary pad 30 via low frequency (LF) antennas of a smart key (SMK) system or a control part 20 of the SMK system.

For example, the magnetic field alignment apparatus 10 may use, among a plurality of LF antennas 21, 22, 23, 24, 25, and 26, the first antenna 21 located in an external door handle of a driver's seat and the second antenna 22 located in an external door handle of a passenger's seat. Transmission coverage of the first and second antennas 21 and 22 may be about 5 meters to 10 meters. However, in the present embodiment, the coverage of the first and second antennas may be restricted to 3 meters or below so that communications with other transponders except the transponder 32 can be prevented.

Usually, the SMK system used in a vehicle may have 5 to 8 LF antennas. However, as described above, the first antenna and second antenna, which are located outside of the vehicle, are used in embodiments of the present disclosure. Since other antennas are located in the vehicle or out of communication ranges of transponders, they cannot transmit signals to or receive signals from the transponders located outside the vehicle due to characteristics of LF. Even if some antennas except the first and second antennas can transmit signals to outside of the vehicle, their transmissions may be disabled by using a means such as a switch selectively controlling their operations, while magnetic field alignment is performed.

The primary pad 30 may include a GA coil (i.e., primary coil) of a GA, and be located in a predetermined position of a parking bay or charging area. It is explained that the primary pad 30 embeds the transponder 32 in the present embodiments of the present disclosure. However, without being limited to the above description, the transponder 32 may be attached to an outside of a housing of the primary pad 30 or located in a predetermined distance from the housing of the primary pad 30.

The transponder 32 may be a device having a function of transmitter and a function of a receiver. That is, the transponder 32 may transmit electric signals and receive electric signals. In embodiments of the present disclosure, the transponder 32 may have a structure similar as that of a smart key in the SMK system.

FIG. 3 is a block diagram of a smart key system of a vehicle, which connects a magnetic field alignment apparatus to a transponder.

As shown in FIG. 3, a SMK system used for a magnetic field alignment apparatus according to embodiments of the present disclosure may include a SMK control part or electronic control unit (SMK ECU) 20, the first antenna 21, the second antenna 22, a LF transmitter 37, an ultra-high frequency (UHF) receiver 28, and a UHF antenna 29. The smart key system may be basically installed in a vehicle.

The magnetic field alignment apparatus according to the present embodiment may include an interface 66 used for exchanging necessary commands and signals with the SMK system. The interface 66 may include at least one of a spectrum control service, a power control service, an antenna management service, a transmit/receive chain control service, etc.

Here, the spectrum control service may be used for configuring spectrum-related parameters such as center frequencies of a carrier frequency and a sampling frequency which are given to the SMK system, and a bandwidth. The power control service may be used for configuring LF power related parameters or UHF power related parameters such as a maximum transmission power level, a transmission power level for each antenna, and a reception gain. The antenna management service may be used for selecting an antenna port. The antenna management service may use factors such as antenna radiation pattern, antenna gain, antenna direction, sector composition, etc. In addition, the transmit/receive chain control service may be used for providing parameters related to real-time control of a chain of the LF transceiver or a chain of the UHF receiver. Here, the parameters may include transmit start/end time, transmit resume/end time, receive start/end time, spectrum and/or power related values, etc.

According to embodiments of the present disclosure, the magnetic field alignment apparatus may transmit or receive signals at different frequencies by interworking with the SMK control part 20 via the interface 66. In other words, the magnetic field alignment apparatus may transmit two LF signals via the first antenna 21 and the second antenna 22 which are located with a predetermined gap, and receive UHF response signals from transponders corresponding to primary pads.

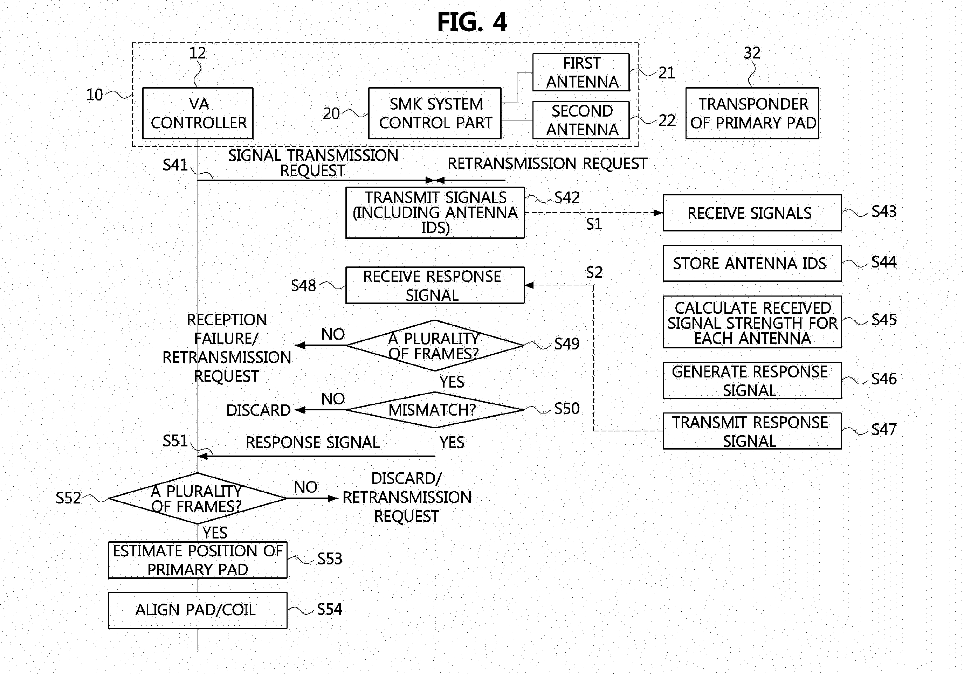

FIG. 4 is a sequence chart illustrating a magnetic field alignment method of a wireless power charging system according to embodiments of the present disclosure.

As shown in FIG. 4, a magnetic field alignment method of a wireless power charging system according to embodiments of the present disclosure may be performed through command and control (C&C) communications and/or high-level communications (HLC) between and the transponder 32 corresponding to the primary pad and the magnetic field alignment apparatus 10 comprising the VA controller 12, the SMK control part 20, the first antenna 21, and the second antenna 22.

Specifically, the VA controller 12 of the magnetic field alignment apparatus 10 may transmit a signal transmission request signal to the SMK control part 20 (S41), and the SMK control part 20 may transmit, in response to the signal transmission request signal, a first signal including an identifier of the first antenna 21 (first antenna ID) through the first antenna 21 and a second signal including an identifier of the second antenna 22 (second antenna ID) through the second antenna 22 (S42). Each of the first signal and second signal S1 may be a LF signal transmitted through the corresponding antenna (i.e., first antenna or second antenna).

The transponder 32 corresponding to the primary pad receiving the first signal and second signal may store the first antenna ID and the second antenna ID (S43, S44), calculate magnetic fields corresponding to received signal strengths for respective antennas (S45), and generate a response signal (S46). The generated response signal may include first response information comprising the first antenna ID, received signal strength of the first signal, and transmission (TX) signal strength of the transponder, and second response information comprising the second antenna ID, received signal strength of the second signal, and TX signal strength of the transponder. The transponder 32 may transmit the response signal S2 (S47). The transponder 32 may transmit the response signal S2 at a frequency different from the frequency used for receiving the first signal and the second signal.

Then, the SMK control part 20 may receive the response signal S2 from the transponder 32 (S48). In order to receive the response signal S2, the SMK control part 20 may use an additional reception antenna (e.g., see 29 of FIG. 3). The additional reception antenna may be a UHF antenna.

Then, the SMK control part 20 may determine whether the received response signal comprises frames more than a predetermined number received during a preconfigured time period (S49). If it is determined that the predetermined number of frames are not received during the preconfigured time period, the corresponding response signal may be discarded as being determined as 'reception failure', and request/reception of retransmission of the first signal and second signal are performed.

According to the determination result of the step S49, if it is determined that the response signal comprising the predetermined number of frames are not correctly received, the SMK control part 20 may determine a mismatch based on the information included in the response signal (S50). In the determination of the mismatch, the TX signal strength of the transponder may be compared with the received signal strength of the response signal. If the comparison result is less than a threshold value, the transponder and the reception antenna are determined to be 'mismatched', and the corresponding response signal may be excluded from search targets or discarded. Through this mismatch determination procedure, the response signal may be verified and reliability of position estimation of the primary pad can be enhanced.

Then, the VA controller 12 may receive the response signal from the SMK control part 20 (S51), and estimate a position of the primary pad based on the response signal (S53). The position estimation on the primary pad may be performed by using combination of a triangulation technique and various techniques based on received signal strength indicator (RSSI), in order to retain accuracy and reliability.

On the other hand, the above-described step S49 or S50 may be performed by not the SMK control part 20 but the VA controller 12. For example, after receiving the response signal, the VA controller 12 may determine whether the response signal comprises frames more the predetermined number (S52). However, in the case that the SMK control part 20 performs the above step, the VA controller 12 may skip the step S52.

Then, the VA controller 12 may move the secondary pad or the secondary coil of the secondary pad in the EV, based on the estimated position of the primary pad (S53), and align the primary coil with the secondary coil (S54).

Meanwhile, although it was explained that the VA controller 12 transmits the request signal to the SMK control part 20, and the SMK control part 20 transmits the response signal in response to the request signal, embodiments of the present disclosure are not restricted to the above example. For example, the VA controller 12 may be configured to share the first antenna 21 and the second antenna 22 with the SMK control part 20, and selectively use antennas through interworking with the SMK ECU 20. In this case, the VA controller 20 may be configured to use the first antenna and the second antenna while a predetermined signal level according to a specific mode (e.g., standby state) of the SMK control part 20 is maintained. That is, according to various embodiments of the present disclosure, without the request signal, the VA controller 12 may directly use the first antenna and the second antenna to transmit the first signal and second signal while the SMK control part 20 does not use them.

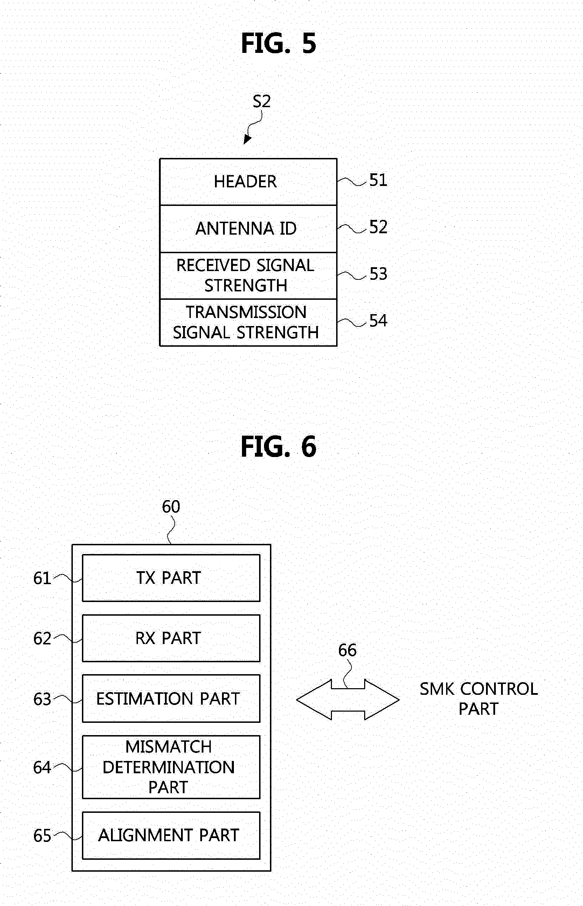

FIG. 5 is an exemplary view of a format of a response signal received from a transponder.

As shown in FIG. 5, a magnetic field alignment apparatus according to embodiments the present disclosure may obtain response information through the response signal S2 received from the transponder.

The response signal S2 may comprise a header 51, antenna ID 52, received signal strength 53, transmission signal strength 54. Here, the antenna ID 52, the received signal strength 53, and the transmission signal strength 54 may constitute response information.

The antenna ID 52 may include the first antenna ID and the second antenna ID. The received signal strength 53 may include received signal strength of the first signal and received signal strength of the second signal. Also, the transmission signal strength 54 may include transmission strength of the response signal transmitted by the transponder.

FIG. 6 is a block diagram of a magnetic field alignment apparatus of a wireless power charging system according to embodiments of the present disclosure.

The magnetic field alignment apparatus according to embodiments of the present disclosure may comprise a control part 60 and a storage part connected to the control part 60. The control part 60 may be implemented using at least one of ECUs embedded in the EV or a wireless charging controller (e.g., it may correspond to the VA controller). The control part 60 may perform the magnetic field alignment method by executing modules or program codes stored in the storage part.

The control part 60 of the magnetic field alignment apparatus, as illustrated in FIG. 6, may comprise a transmission (TX) part 61, a reception (RX) part 62, an estimation part 63, a mismatch determination part 64, and an alignment part 65. Also, the control part 60 may include an interface 66 performing C&C communications with the SMK control part 20.

The TX part 61 may transmit, at LF frequency, the first signal and the second signal, each of which includes corresponding antenna ID, through the first antenna and the second antenna for the SMK system installed in the EV. Also, when a response signal including a plurality of frames more than the predetermined number are not received during a predetermined time period, the TX part 61 may be requested to retransmit the first signal and the second signal by ignoring the response signal.

The RX part 62 may receive the response signal for the first signal and the second signal from the transponder. The RX part 62 may be configured to receive the response signal at a frequency (e.g., UHF) different from the frequencies of the first signal and the second signal.

The estimation part 63 may estimate a position of a primary pad corresponding to the specific transponder based on response information such as the received signal strength of the first signal and the received signal strength of the second signal, which are included in the response signal. The estimation part 63 may be configured to generate and output continuous or sequential estimation results according to repetitive operations of the TX part 61 and RX part 62.

The mismatch determination part 64 may determine a mismatch between a reception antenna 29 and a transponder based on information included in the response signal. That is, the mismatch determination part 64 may compare the TX signal strength of the transponder with the received signal strength of the response signal, and determine that the reception antenna and the corresponding transponder are mismatched when the comparison result is less than a threshold value.

The alignment part 65 may actually perform alignment between the primary coil (i.e., GA coil) of the primary pad and the secondary coil (i.e., VA coil) of the EV. The alignment between the primary coil and the secondary coil may include aligning them so that their magnetic fields can be aligned to have a predetermined shape or their electric field density can become above a predetermined threshold.

Also, the alignment part 65 may be configured to move the secondary pad or the secondary coil of the secondary pad of the EV to a position at which the received signal strength of the first signal becomes maximum and the received signal strength of the second signal becomes maximum, according to the estimation result of the estimation part 63. Of course, according to various embodiments, the alignment part 65 may be configure to provide relative position information needed for the GA controller to move the primary pad or the primary coil (i.e., GA coil) of the primary pad.

The above-described TX part 61, RX part 62, estimation part 63, mismatch determination part 64, and alignment part 65 may perform respective functions by interworking with at least one service of the interface 66.

In various embodiments of the present disclosure, the above-described VA controller 60 may be implemented by using a processor or a microprocessor. The controller 60 may include at least one core and a cache memory. In case that the controller 60 has a multi-core architecture, the multi-core architecture may be a single package comprising integrated circuits, into which two or more independent cores are integrated. Also, in case that the controller 60 has a single-core architecture, the single core may be a central processing unit (CPU). The CPU may be implemented as a system on chip (SoC) into which a micro control unit and various peripheral devices (or, integrated circuitry for external peripheral devices) are integrated. However, various embodiments are not limited to the above examples. Here, the core may include registers storing instructions to be executed, an arithmetic logical unit (ALU) performing comparison, determination, and operations, a control unit controlling the CPU for interpretation and execution of the instructions, an internal bus, etc.

Also, the controller 60 may include at least one of a data processor and an image processor, or a combination of them. The controller 60 may include at least one electronic control unit (ECU) embedded in a vehicle.

Also, the controller 60 may comprise a peripheral interface and a memory interface. In this case, the peripheral interface may connect the controller 60 to an input/output system and other peripheral devices (e.g., communication part, VA, smart key system control part, etc.), and the memory interface may connect the controller 60 to the storage part.

Meanwhile, according to various embodiments, components 61 to 65 of the controller 60 in the magnetic field alignment apparatus may be services or functions implemented by executing functional blocks or modules stored in a storage means of the controller or ECU. However, various embodiments of the present disclosure are not restricted to the above-described example. The above-described components may be implemented to operate in a ECU of the EV, as stored in a computer readable medium in a software form for implementing predetermined functions (at least part of the magnetic field alignment method), or transmitted to a remote site in a carrier form. Here, the computer readable medium may be connected to a plurality of computing apparatuses or a cloud system which are connected through a network, and at least one of the plurality of computing apparatuses and the cloud system may store source code, intermediate code, or executable code for performing the magnetic field alignment method according to the present disclosure in the storage means of the magnetic field alignment apparatus according to the present disclosure.

The computer readable medium may include a program instruction, a data file, a data structure, or a combination thereof. The program instructions recorded on the computer readable medium may be designed and configured specifically for the present disclosure or can be publicly known and available to those who are skilled in the field of computer software. Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the operation of the present disclosure, and vice versa.

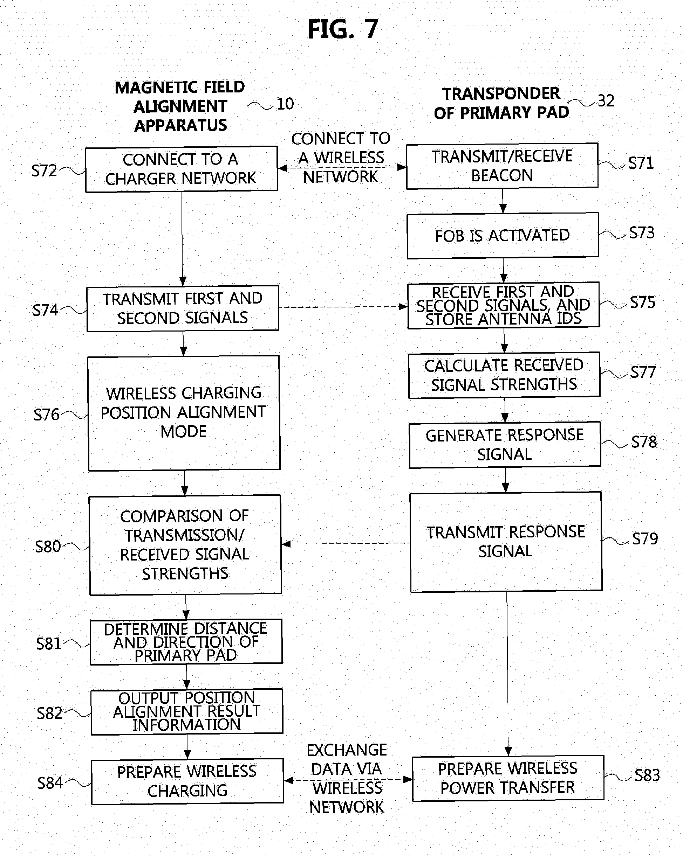

FIG. 7 is a sequence chart illustrating an additional magnetic field alignment method of a wireless power charging system according to embodiments of the present disclosure.

As shown in FIG. 7, the magnetic field alignment apparatus 10 according to the present embodiment may connect the transponder 32 to a wireless network via transmission or reception of a beacon (S71) when the EV enters a charging area where the transponder 32 corresponding to the primary pad is located. In this case, a driver of the EV may be guided to drive the EV to a place near from the primary pad via wireless communications.

In order to help understanding, in the present disclosure, the transponder may be referred to as a 'fob' corresponding to a smart key in a SMK system, having practically the same function and composition as that of the smart key.

When connected to a charger wireless network (S72), the fob corresponding to the transponder 32 may be activated to receive signals (S73). The fob may be activated by using a beacon or any other methods. For example, the fob may be activated by turning on a wireless charging switch in the vehicle, or may be always maintained as activated.

When the vehicle enters the charging area and starts alignment for wireless charging, the magnetic field alignment apparatus 10 may radiate magnetic field (i.e.,transmit the first signal and the second signal) by using the LF transmitter in the SMK system (S74). The first signal may include the first antenna ID and be transmitted through the first antenna, and the second signal may include the second antenna ID and be transmitted through the second antenna. They may be transmitted at a specific frequency band with maximum power. For example, the frequency of the first and second signals may be 120 to 150kHz, and transmission power for them may be 40nT. In this case, the coverage of the first signal and second signal may be controlled to about 3 meters or below, and thus interferences to other adjacent transponders can be prevented.

When the signals transmitted by the magnetic field alignment apparatus are received with at least power of 4nT, the fob may transmit a response signal in response to the signals. If the signals are received with below 4nT power, the magnetic field alignment apparatus and the fob may be determined to be 'mismatched'.

The fob may receive the first signal and the second signal, and store the LF antenna IDs included in the first and second signal (S75), and calculate received signal strengths of the first signal and the second signal (S77). In response to the first signal and the second signal, the fob may generate a response signal which is a UHF signal or RF signal (S78). Then, the fob may transmit the response signal including the first antenna ID, the second antenna ID, received signal strengths of the first signal and the second signal, and transmission signal strength (S79). The transmission signal strength of the response signal may be equal to or less than 70 dBm. The fob may transmit the response signal comprising 4 consecutive frames. In this case, if the magnetic field alignment apparatus 10 cannot receive the response signal as including two or more frames consecutively, reception of the response signal may be considered as 'failure'.

Meanwhile, after transmitting the first signal and the second signal, the magnetic field alignment apparatus 10 may maintain its operation mode to a wireless charging alignment mode or a magnetic field alignment mode (S76).

Then, after receiving the response signal from the transponder 32, the magnetic field alignment apparatus 10 may compare the transmission signal strength and the received signal strength of the response signal, and compare the transmission signal strength and the received signal strength of the first signal and the second signal (S80). Here, if the RSSI of the response signal does not exceed 40, the magnetic field alignment apparatus 10 may determine that the SMK control part and the fob are mismatched. For example, if the magnetic flux is 10nT and RSSI is 60dBm, the RSSI becomes 42, and the magnetic field alignment apparatus may determine that the SMK control part and the fob are matched.

Then, the magnetic field alignment apparatus 10 may determine a position of the primary pad coupled to the transponder 32 identified based on the comparison of transmission/reception signal strengths of the first signal, second signal, or response signal, and determine a relative distance and/or direction of it from the secondary pad or the EV based on the position (S81). The magnetic field alignment apparatus 10 may output position alignment result information corresponding to the determination result (S82).

For example, if the RSSI between the first antenna and the fob is 100, and the RSSI between the second antenna and the fob is 100, the primary pad or primary coil of the GA may be considered to be 100 percent aligned with the secondary pad or secondary coil of the VA. Also, it may be assumed that a magnetic center point of the secondary coil is located in (0,0) in a x-y coordinate system where a magnetic center point of the primary coil is an origin.

Meanwhile, when the RSSI between the first antenna and the fob is 0, and the RSSI between the second antenna and the fob is 0, the primary pad or primary coil of the GA may be considered to be 100 percent misaligned with the secondary pad or secondary coil of the VA. Also, it may be assumed that a magnetic center point of the secondary coil is located in over ($\pm$600, $\pm$600) in a x-y coordinate system where a magnetic center point of the primary coil is an origin.

The above-described position alignment result information may be used for moving the EV, the secondary pad of the EV, or the secondary coil (i.e., VA coil) of the secondary pad or position alignment for them. According to implementations, the information may be used for moving the primary pad or the primacy coil (i.e., GA coli) of the primary pad or position alignment for them.

After the magnetic field alignment apparatus 10 completes of magnetic field alignment of the primary coil and second coil, the transponder 32 may prepare wireless power transfer from the primary pad (S83), and the magnetic field alignment apparatus 10 may be transitioned from the wireless charging position alignment to a wireless charging preparation mode, and the VA controller may prepare to start wireless charging (S84). Here, the VA controller and the GA controller connected to the primary coil may exchange data for wireless charging of the EV via a wireless network such as a mobile communication network or WiFi.

The magnetic field alignment method according to the present embodiment may use a triangulation technique and/or RSSI-based various techniques to estimate a relative position of the primary pad connected to the transponder or the transponder based on the response information included in the response signal.

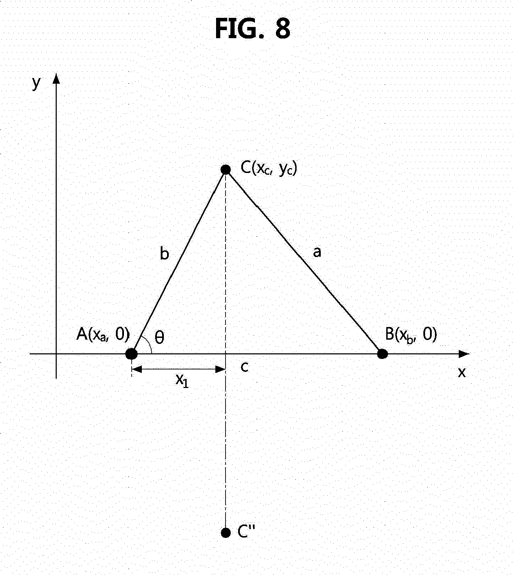

FIG. 8 is a view to explain a triangulation technique used for a magnetic field alignment method according to embodiments of the present disclosure.

As illustrated in FIG. 8, a triangulation technique may be explained briefly. When a point A is located at ($x_a$, 0) in a x-y coordinate system, a point B is located at ($x_b$, 0) in the same coordinate system, and a point C is located at ($x_c$, $y_c$), a distance between A and C may be defined as b, a distance between B and C may be defined as a, and a distance between A and B may be defined as c. According to cosine theorem, cos θ of ∠ CAB may be defined as the below Equation 1.

[Equation 1]

$$\cos\theta = \frac{b^2 + c^2 - a^2}{2bc} \quad (c = x_b - x_a)$$

Thus, an x-axis component ($x_c$) of the point C may be calculated by the below Equation 2.

[Equation 2]

$$x_c = x_a + x_1$$
$$= x_a + b\cos\theta$$
$$= x_a + b \cdot \frac{b^2 + c^2 - a^2}{2bc}$$
$$= x_a + \frac{b^2 + c^2 - a^2}{2c}$$

Meanwhile, a y-axis component ($y_c$) of the point C may be calculated by the below Equation 3.

[Equation 3]

$$y_c = \sqrt{b^2 - x_1^2}$$

In the Equation 3, $x_1$ may represent a distance between a point where a perpendicular line of C intersects the x-axis and the point A.

Using the above-described triangulation technique, based on positions of two access points (i.e., base stations) corresponding to A and B positions of which are known, a position of the primary pad corresponding to C may be estimated.

In actual implementations, relations between received signal strengths and distances may be predetermined and stored in a database, and a received signal strength measured in performing the method may be converted to a distance. However, when only two access points (i.e., points whose positions are known) are used, a case in which the point C (a positioning target) or an imaginary point C' located at a symmetrical point in x-axis cannot be specified may occur. Thus, one or more access points (e.g., points whose position is known) may be additionally used to discriminate the point C and the imaginary point C' and estimate the position of the point C.

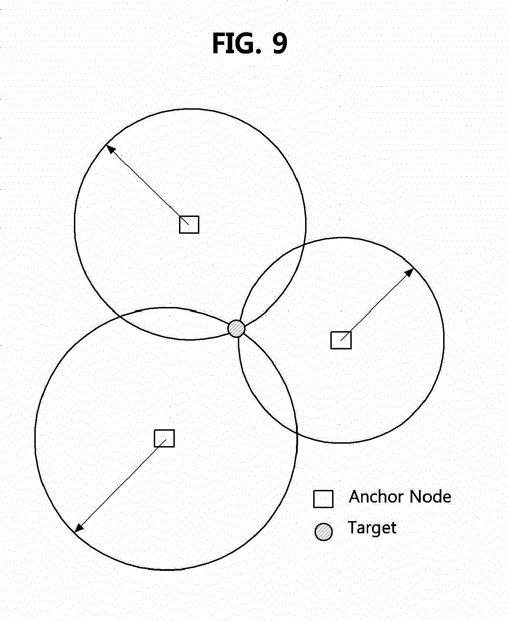

FIG. 9 is a view to explain a RSSI based position estimation method used for a magnetic field alignment method according to embodiments of the present disclosure.

As illustrated in FIG. 9, a RSSI based position estimation method may be explained briefly. The magnetic field alignment apparatus according to the present embodiment may estimate a distance and/or direction from an anchor node position of which is known to a target based on measure RSSIs. That is, if distances from three or more anchor nodes are known, a position of the target can be estimated.

Here, the anchor node may be the first antenna, the second antenna, or the reception antenna. However, without being restricted, the anchor node may be a combination of the first antenna, the second antenna, and the secondary coil, or a combination of the first antenna, the second antenna, and at least one of other smart key system antennas. In addition, the target may be the transponder or the primary pad corresponding to the transponder, or the primary coil (i.e., GA coil) supported by the primary pad.

Although three circles are illustrated as they intersect in a single point in FIG. 9, three circles actually do not intersect in a single point due to effects of noises included in the measurement values, errors of the database, etc. In this case, through error calibration, appropriate single point may be obtained as an intersecting point. As a method for the error calibration, a method, in which an optimal intersecting point is found out by varying diameters of respective circles within a range corresponding to a predicted error, may be used. Especially, in the above error calibration method, if the range is varied by applying a positive weight or a negative weight to an anchor node having the strongest signal strength or an anchor node having the weakest signal strength among the three anchor nodes, the intersecting point can be estimated more reliably.

Meanwhile, the magnetic field alignment apparatus according to the present embodiment may use the RSSI based position estimation method in addition to the above-described triangulation technique so that the relative position (distance and direction) of the secondary pad, and correctly align the primary pad with the secondary pad based on the relative position. That is, the alignment part of the magnetic field alignment apparatus may finely align the position of the secondary pad to the primary pad by moving the secondary pad to a position where the first antenna and/or transponder have the largest signal strength and the second antenna and/or transponder have the largest signal strength.

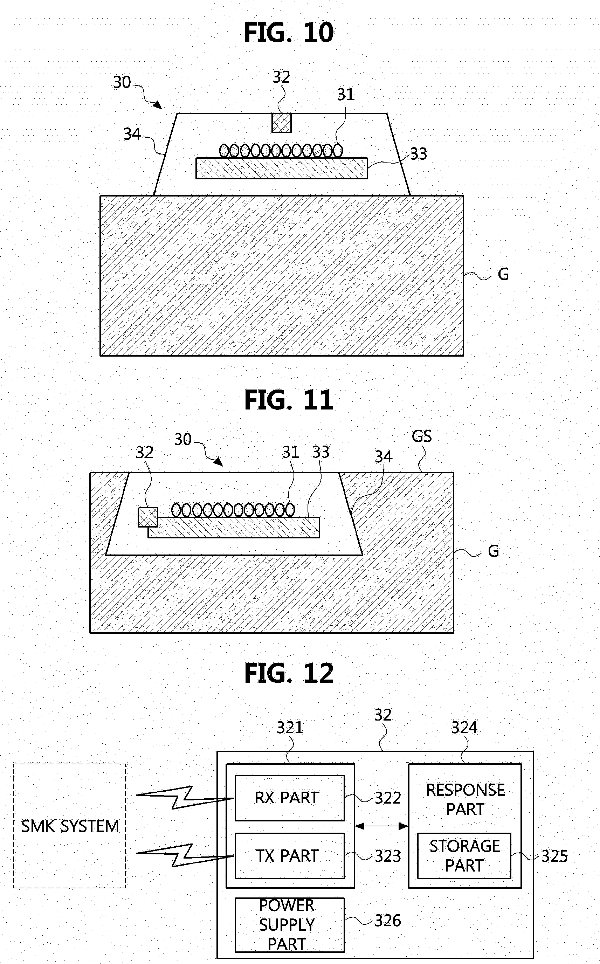

FIG. 10 is a cross-sectional diagram of a primary pad according to embodiments of the present disclosure.

As shown in FIG. 10, a primary pad 30 according to embodiments of the present disclosure may comprise a primary coil 31 corresponding to a GA coil, a transponder 32, a supporting body 33, and a housing 34.

The primary coil 31 is arranged in the housing 34 protruding from a surface of a ground G, as supported by the supporting body 33. The primary coil 31 may be designed to have one of various topologies. The supporting body 33 may made with ferrite material. The housing 34 may include material through which a magnetic field passes well but electricity does not pass well.

The transponder 32 may be located in an upper side of a center in the primary pad 30. The transponder 32 may be inserted or buried into an upper depressed portion of the housing 34. The transponder 32, as an independent device which is not electrically connected to the GA controller connected to the primary coil 31, may be located in the primary pad 30. However, various embodiments of the present disclosure may not be limited to the above example.

FIG. 11 is a cross-sectional diagram of a variation of a primary pad.

As shown in FIG. 11, a primary pad 30 according to embodiments may comprise a primary coil 31 corresponding to a GA coil, a transponder 32, a supporting body 33, and a housing 34. The primary coil 31, the transponder 32, and the housing 34 including the supporting body 33 may be buried into the ground G. That is, the primary pad 30 may not protrude from the surface GS of the ground.

The primary coil 31 may be supported by the supporting body 33, in the housing 34 buried into the ground G. The transponder 32 may be stored in the housing 32. The transponder 32 may be supported by the supporting body 33 in the housing 32 as combined with the supporting body 33. The transponder 32 may be electrically connected to the GA controller connected with the primary coil 31. However, various embodiments may not be limited to the above example.

Meanwhile, the above-described primary coil of primary pad may be designed to have one of various topologies, and its topology may explain its magnetics. For example, the primary coil may be manufactured to have a common topology such as a polarized, a non-polarized, multi-coil type, etc. The polarized coil may have a shape such as a solenoid, or a double D (DD) shape, and determine a shape of fluxes according to orientation of the pad. The non-polarized coil may have a shape such as a circle or a rectangle, and have a pole in a center of the assembly. The multi-coil type topology is a topology combining the above-described two structured coils, and may form a polarized or non-polarized magnetic field including a vertical magnetic field entering into the assembly and a horizontal by using a coil uncoupled with the combined coils. The multi-coil type topology may include a multi-coil double-D quadrature (DDD) type and a multi-coil bipolar type.

Also, the above-described secondary coil (i.e., VA coil) of the secondary pad may be designed to have a topology identical to or different from that of the primary coil.

FIG. 12 is a block diagram of a transponder of a primary pad.

As shown in FIG. 12, a transponder 32 according to embodiments of the present disclosure may be included in the primary pad or combined with the primary pad, and comprise a transmission (TX) part 323, a reception (RX) part 322, a response part 324, a storage part 325, and a power supply part 326. The transponder 32 may perform communications with the magnetic field alignment apparatus, and operate for the magnetic field alignment apparatus to estimate the position of the primary pad corresponding to the transponder 32 through estimation of the position of the transponder 32.

The RX part 322 may receive the first signal and the second signal from the magnetic field alignment apparatus or the SMK system of the EV. The RX part 322 may include an LF antenna and a receiving circuitry.

The TX part 323 may transmit a response signal for the first signal and the second signal. The TX part 323 may include an LF or RF antenna or a UHF antenna, and a transmitting circuitry.

The above-described RX part 322 or TX part 323 may have a LF antenna or both of LF antenna and UHF antenna, and may be configured to form a transceiving part 321 sharing at least some of elements of the parts 322 and 323.

The response part 324 may store antenna IDs included in the first signal and second signal received at the RX part 322 in the storage part 325. The response part 324 may calculate received signal strengths of the first signal and the second signal. The response part 324 may read out a predetermined transmission signal strength of a response signal from the storage part 352, and generate the response signal including the antenna IDs, the received signal strengths, and the transmission signal strength. The response part 324 may transmit the response signal constituted by a plurality of consecutive frames through the TX part 323.

The storage part 325 may not be restricted to a form included in the response part 324. That is, the storage part 325 may exist as an independent component which is connected to the response part 324, and may be included in the transponder 32.

The power supply part 326, as an independent power source, may supply power to the transponder 32. The power supply part 326 may include a rechargeable battery, and a charging circuitry configured to charge the rechargeable battery by using the LF signals such as the first signal and the second signal, RF signals, or UHF signals.

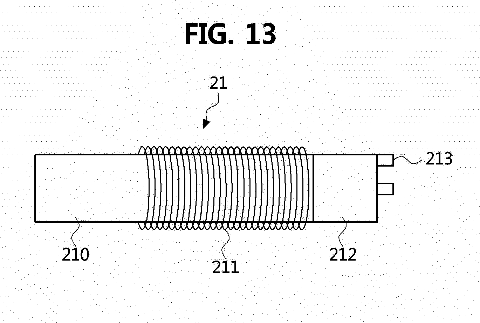

FIG. 13 is a view of an antenna used for a magnetic field alignment apparatus of a wireless power charging system according to embodiments of the present disclosure.

As shown in FIG. 13, the antenna 21 used for the magnetic field alignment apparatus according to the present disclosure may be configured as a LF antenna in a SMK system. In this case, the antenna may have a structure comprising a ferrite rod 210 around which a copper line 211 are coiled, and be located in an external door handle of a driver's seat or a passenger's seat.

The antenna 21 may include an insulating element 212 connected to an end of the ferrite rod 210, and a pair of terminals 213 which protrude from an end of the insulating element 212 and are connected to both ends of the copper line 211. Here, the pair of terminals 213 may be connected to the SMK control part 20 or the magnetic field alignment apparatus.

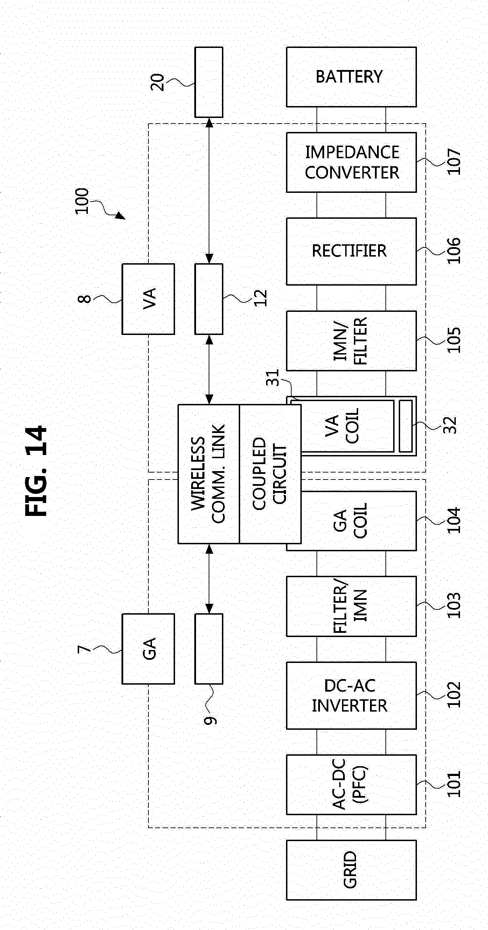

FIG. 14 is a block diagram to explain a flow of wireless power transfer of a wireless charging system according to embodiments of the present disclosure.

The VA controller for implementing the magnetic field alignment method according to the present disclosure may perform charging of a battery of an EV after completion of the magnetic field alignment.

As illustrated in FIG. 14, a wireless charging system 100 for charging a battery of an EV may comprise a GA 7 and a VA 8. The GA 7 may comprise an AC-DC converter 101 having a power factor correction (PFC) function which is connected to a grid, a DC-AC converter 102, a filter/impedance matching network (IMN) 103, and a GA coil 104. The transponder 32 may be located near from the GA coil 204 of the HA 7. Also, the VA 8 may comprise a VA coil 105 forming a coupled circuit with the GA coil 104, an IMN/filter 106, a rectifier 107, and an impedance converter 108. The impedance converter 108 may be connected to the battery.

In the vehicle, the smart car key system controller 20 or other controller performing similar function may exist. Also, a VA controller 12 of the VA 8 may perform HLC and/or C&C communications with a GA controller 9 of the GV 7 via a wireless communication link.

First, for the wireless power transfer procedure of the wireless charging system, a current to be charged to the battery is determined in the VA 8. Then, a power request is transferred from the VA 8 to the GA 8 via the wireless communication link.

Then, the GA 7 may recognize the power request from the VA 8, convert power supplied from a grid to high frequency AC current, and transfer it to the GA coil 104.

Then, the high frequency AC current having is transferred from the GA coil 104 to the VA coil 105 via coupling, rectified and processed in the VA 8, and finally charged to the battery.

The above-described procedure continues until the battery is fully charged and the VA transmits a signal indicating completion of charging to the GA.

Whilst the above described embodiments implement the present technique in terms of apparatus and methods for operating specific processing hardware supporting the techniques concerned, it is also possible to provide so-called virtual machine implementations of hardware devices. There virtual machine implementations run on a host processor typically running a host operating system supporting a virtual machine program. Typically, large powerful processors are required to provide virtual machine implementations which execute at a reasonable speed, but such an approach may be justified in certain circumstances, such as when there is a desire to run code native to another processor for compatibility or re-use reasons. The virtual machine program is capable of executing an application program (or operating system) to give the same results as would be given by execution of the program by a real hardware device. Thus, the program instructions may be executed from within the application program using the virtual machine program.

While the example embodiments of the present disclosure and their advantages have been described in detail, it should be understood that various changes, substitutions and alterations may be made herein without departing from the scope of the disclosure.

### Claims

1. A magnetic field alignment method for a wireless charging system, performed by a magnetic field alignment apparatus including a vehicle assembly (VA) controller, the magnetic field alignment method comprising:

   transmitting a first signal through a first antenna and a second signal through a second antenna, wherein each of the first signal and the second signal includes an antenna identifier, and the first antenna and the second antenna are antennas used for a smart key (SMK) system installed in an electric vehicle (EV);
   receiving a response signal in response to the first signal and the second signal from a transponder in a location corresponding to a primary coil of the wireless charging system; and
   estimating a position of the primary coil based on a received signal strength of the first signal and a received signal strength of the second signal, which are included in the received response signal.

2. The magnetic field alignment method according to claim 1, wherein, in the receiving of the response signal, a plurality of frames constituting the response signal are transmitted by the transponder, and the first signal and the second signal are retransmitted when a predetermined number of frames constituting the response signal are not received during a predetermined period.

3. The magnetic field alignment method according to claim 1 or 2, wherein the response signal includes first response information including an identifier of the first antenna, received signal strength of the first signal, and transmission signal strength of the transponder, and further includes second response information including an identifier of the second antenna, received signal strength of the second signal, and transmission signal strength of the transponder.

4. The magnetic field alignment method according to any one of claims 1 to 3, further comprising, after the receiving of the response signal, comparing the transmission signal strength of the transponder with a received signal strength of the response signal transmitted by the transponder, and determining that the transponder and the magnetic field alignment apparatus are mismatched when a result of the comparison is less than a predetermined threshold.

5. The magnetic field alignment method according to any one of claims 1 to 4, wherein the first antenna and the second antenna are connected to the VA controller via the SMK system, and are installed in external door handles of a driver's seat and a passenger's seat of the EV.

6. The magnetic field alignment method according to any one of claims 1 to 5, further comprising, after the estimating of the position of the primary coil, aligning the primary coil with a secondary coil of the EV, wherein a secondary pad is moved to a position where a received signal strength between the first antenna and the transponder is maximized, and a received signal strength between the second antenna and the transponder is maximized.

7. The magnetic field alignment method according to any one of claims 1 to 6, wherein the response signal is received at a frequency different from respective frequencies of the first signal and the second signal, and the frequency includes an ultra-high frequency (UHF).

8. A magnetic field alignment apparatus for a wireless power charging system, which is installed in an electric vehicle (EV), the magnetic field alignment apparatus comprising:

a memory storing program instructions for performing a magnetic field alignment method; and
a processor executing the stored program instructions, which when executed cause the magnetic field alignment apparatus to operate as:

a transmission part transmitting a first signal through a first antenna and a second signal through a second antenna, wherein each of the first signal and the second signal includes an antenna identifier, and the first antenna and the second antenna are antennas used for a smart key (SMK) system installed in an electric vehicle (EV);
a reception part receiving a response signal in response to the first signal and the second signal from a transponder in a location corresponding to a primary coil of the wireless power charging system; and
an estimation part configured to estimate a position of the primary coil based on a received signal strength of the first signal and a received signal strength of the second signal, which are included in the received response signal.

9. The magnetic field alignment apparatus according to claim 8, wherein the transmission part retransmits the first signal and the second signal when a predetermined number of frames constituting the response signal are not received by the reception part during a predetermined period.

10. The magnetic field alignment apparatus according to claim 8 or 9, wherein the response signal includes first response information including an identifier of the first antenna, received signal strength of the first signal, and transmission signal strength of the transponder, and further includes second response information including an identifier of the second antenna, received signal strength of the second signal, and transmission signal strength of the transponder.

11. The magnetic field alignment apparatus according to any one of claims 8 to 10, wherein the magnetic field alignment apparatus operates further as a mismatch determination part comparing the transmission signal strength of the transponder with a received signal strength of the response signal transmitted by the transponder, and determining that the transponder and the magnetic field alignment apparatus are mismatched when a result of the comparison is less than a predetermined threshold.

12. The magnetic field alignment apparatus according to any one of claims 8 to 11, further comprising at least one interface for transmitting signals to and receiving signals from a control part of the SMK system.

13. The magnetic field alignment apparatus according to any one of claims 8 to 12, wherein the magnetic field alignment apparatus operates further as an alignment part aligning the primary coil with a secondary coil of the EV according to an estimation result of the estimation part, wherein the alignment part moves a secondary pad to a position where a received signal strength between the first antenna and the transponder is maximized, and a received signal strength between the second antenna and the transponder is maximized.

14. The magnetic field alignment apparatus according to any one of claims 8 to 13, wherein the reception part receives the response signal at a frequency different from respective frequencies of the first signal and the second signal.

15. The magnetic field alignment apparatus according to claim 8 to 12, wherein a primary pad comprising:

the primary coil which is connected to an electric vehicle (EV) power supply apparatus of a charging station and transfers power to a secondary coil of an EV via magnetic induction coupling or magnetic resonance coupling; and
a transponder which is embedded in a housing supporting the primary pad or combined with the housing, wherein the transponder receives a first signal and a second signal from the EV and, in response, transmits a response signal including information which is determined based on antenna identifiers included in the first signal and the second signal.

# FIG. 1

# FIG. 2

# FIG. 3

# FIG. 4

EP 3 157 128 A1

# FIG. 5

S2

| | |
|---|---|
| HEADER | 51 |
| ANTENNA ID | 52 |
| RECEIVED SIGNAL STRENGTH | 53 |
| TRANSMISSION SIGNAL STRENGTH | 54 |

# FIG. 6

60

| | |
|---|---|
| 61 | TX PART |
| 62 | RX PART |
| 63 | ESTIMATION PART |
| 64 | MISMATCH DETERMINATION PART |
| 65 | ALIGNMENT PART |

66

SMK CONTROL PART

# FIG. 7

MAGNETIC FIELD
ALIGNMENT ~10
APPARATUS

TRANSPONDER ~32
OF PRIMARY PAD

CONNECT TO
A WIRELESS
NETWORK

S72 — | CONNECT TO A
CHARGER NETWORK |

| TRANSMIT/RECEIVE
BEACON | ~S71

| FOB IS ACTIVATED | ~S73

S74 — | TRANSMIT FIRST AND
SECOND SIGNALS |

| RECEIVE FIRST AND
SECOND SIGNALS, AND
STORE ANTENNA IDS | ~S75

S76 — | WIRELESS CHARGING
POSITION ALIGNMENT
MODE |

| CALCULATE RECEIVED
SIGNAL STRENGTHS | ~S77

| GENERATE RESPONSE
SIGNAL | ~S78

S80 — | COMPARISON OF
TRANSMISSION/
RECEIVED SIGNAL
STRENGTHS |

| TRANSMIT RESPONSE
SIGNAL | ~S79

S81 — | DETERMINE DISTANCE
AND DIRECTION OF
PRIMARY PAD |

S82 — | OUTPUT POSITION
ALIGNMENT RESULT
INFORMATION |

EXCHANGE
DATA VIA
WIRELESS
NETWORK

S84 — | PREPARE WIRELESS
CHARGING |

| PREPARE WIRELESS
POWER TRANSFER | ~S83

21

# FIG. 8

# FIG. 9

☐ Anchor Node
◉ Target

## FIG. 10

30

32

31

34

33

G

## FIG. 11

30

32

31 33

34

GS

G

## FIG. 12

321

32

324

SMK SYSTEM

RX PART

322

RESPONSE PART

TX PART

323

STORAGE PART

325

POWER SUPPLY PART

326

# FIG. 13

# FIG. 14

EP 3 157 128 A1

Europäisches
Patentamt

European
Patent Office

Office européen
des brevets

# EUROPEAN SEARCH REPORT

Application Number

EP 16 19 3935

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2014 205672 A1 (BAYERISCHE MOTOREN WERKE AG) 1 October 2015 (2015-10-01) | 1,7,8, 14,15 | INV. H02J7/02 |
| Y | * paragraph [0001] - paragraph [0016] * <br> * paragraph [0025] - paragraph [0026] * <br> * paragraph [0041] - paragraph [0055] * <br> * paragraph [0068] - paragraph [0070] * <br> ----- | 2-6,9-13 | H02J50/10 <br> H02J50/12 <br> H02J50/90 <br> B60L11/18 <br> H01F38/14 |
| Y | US 2014/188348 A1 (GAUTAMA NEERAJ R [CA] ET AL) 3 July 2014 (2014-07-03) <br> * paragraph [0003] * <br> * paragraph [0010] * <br> * paragraph [0051] * <br> * paragraph [0117] * <br> ----- | 2,4,5,9, 11,12 | |
| Y | US 2010/305779 A1 (HASSAN HASIB [US] ET AL) 2 December 2010 (2010-12-02) <br> * paragraph [0088] - paragraph [0093] * <br> ----- | 3,10 | |
| Y | US 2012/262002 A1 (WIDMER HANSPETER [CH] ET AL) 18 October 2012 (2012-10-18) <br> * figure 11A * <br> * paragraph [0046] * <br> * paragraph [0095] - paragraph [0096] * <br> ----- | 6,13 | TECHNICAL FIELDS SEARCHED (IPC) |
| A | KR 101 535 038 B1 (HYUNDAI MOTOR CO LTD [KR]) 8 July 2015 (2015-07-08) <br> * paragraph [0032] - paragraph [0038] * <br> & US 2016/059723 A1 (KIM DO HOON [KR] ET AL) 3 March 2016 (2016-03-03) <br> * paragraph [0032] - paragraph [0038] * <br> ----- | 1-15 | H02J <br> B60L <br> H01F |

The present search report has been drawn up for all claims

| Place of search | Date of completion of the search | Examiner |
|---|---|---|
| Munich | 25 January 2017 | Dudoignon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 3935

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2017

| Patent document cited in search report | Publication date | Patent family member(s) | | Publication date |
|---|---|---|---|---|
| DE 102014205672 A1 | 01-10-2015 | CN | 106170418 A | 30-11-2016 |
| | | DE | 102014205672 A1 | 01-10-2015 |
| | | US | 2017008410 A1 | 12-01-2017 |
| | | WO | 2015144335 A1 | 01-10-2015 |
| US 2014188348 A1 | 03-07-2014 | CN | 103905127 A | 02-07-2014 |
| | | DE | 102013224330 A1 | 03-07-2014 |
| | | US | 2014188348 A1 | 03-07-2014 |
| US 2010305779 A1 | 02-12-2010 | NONE | | |
| US 2012262002 A1 | 18-10-2012 | CN | 103477566 A | 25-12-2013 |
| | | EP | 2697910 A1 | 19-02-2014 |
| | | JP | 6019103 B2 | 02-11-2016 |
| | | JP | 2014518607 A | 31-07-2014 |
| | | KR | 20140022867 A | 25-02-2014 |
| | | US | 2012262002 A1 | 18-10-2012 |
| | | WO | 2012142040 A1 | 18-10-2012 |
| KR 101535038 B1 | 08-07-2015 | CN | 105391183 A | 09-03-2016 |
| | | DE | 102015216418 A1 | 03-03-2016 |
| | | KR | 101535038 B1 | 08-07-2015 |
| | | US | 2016059723 A1 | 03-03-2016 |

EPO FORM P0459

For more details about this annex : see Official Journal of the European Patent Office, No. 12/82